# EUROPÄISCHE PATENTSCHRIFT

(11) **EP 0 742 894 B1**
(45) Veröffentlichungstag und Bekanntmachung des Hinweises auf die Patenterteilung: **16.12.1998**
(21) Anmeldenummer: 95906962.6
(22) Anmeldetag: 18.01.1995
(51) Int. Cl.: G01M 3/20

(54) **TESTLECK MIT EINER LECKRATENBESTIMMENDEN KAPILLARE**
TEST LEAK WITH A CAPILLARY TUBE DETERMINING THE LEAKAGE RATE
FUITE D'ESSAI AVEC UN TUBE CAPILLAIRE DETERMINANT LE TAUX DE FUITE

(30) Priorität: 02.02.1994 DE 9401661 U; 02.02.1994 DE 9401662 U
(43) Veröffentlichungstag der Anmeldung: 20.11.1996
(73) Patentinhaber: Balzers und Leybold Deutschland Holding Aktiengesellschaft, 63450 Hanau (DE)
(72) Erfinder: WIDT, Rudi, D-60969 Köln (DE)
(74) Vertreter: Leineweber, Jürgen, Dipl.-Phys.
(86) Internationale Anmeldenummer: EP9500166
(87) Internationale Veröffentlichungsnummer: WO9521373

(56) Entgegenhaltungen:
- US-A- 3 209 579
- PATENT ABSTRACTS OF JAPAN vol. 6, no. 63 (C-099) 22. April 1982 & JP,A,57 003 723 (FURUKAWA ELECTRIC CO LTD) 9. Januar 1982
- LE VIDE,LES COUCHES MINCES, Bd. 200, Januar 1980, PARIS, FR, Seiten 33 - 46 B.BLANK ET AL. 'TECHNIQUES DE CONTROLE DE L'ETANCHEITE'
- INSTRUMENTS AND EXPERIMENTAL TECHNIQUES Bd. 16, Nr. 6, November 1973, NY,USA, Seiten 1763 - 1764 I.G.BARYSHNIKOVA ET AL. 'A LEAK SIMULATOR FOR CALIBRATING HELIUM LEAK DETECTORS DURING TESTS BY THE PROBE METHOD'
- EDITOR: R.C.MCMASTER 'Nondestructive Testing Handbook, Band 1, zweite Auflage', 1982, 'ASNT - ASM', (US)

## Beschreibung

Die Erfindung bezieht sich auf ein Testleck mit den Merkmalen des Oberbegriffs des Patentanspruchs 1.

Testlecks dienen der Kontrolle und/oder der Kalibrierung von mit Testgas arbeitenden Lecksuchern. Sie sind mit einer Kapillaren als leckratenbestimmendes Element ausgerüstet. Als Testgas wird überwiegend Helium verwendet.

Kapillaren für Testlecks werden bis heute aus einem Glasrohr gezogen. Die Erzielung einer bestimmten Leckrate erfordert dabei ein hohes Maß an Können und Feingefühl. Jede einzeln handgefertigte Kapillare muß an einem Leckdetektor ausgemessen werden. Danach wird sie entweder verworfen oder nachgezogen und wieder ausgemessen. Bei dieser Art der Herstellung der Kapillaren ist deshalb der Ausschußanteil hoch. Außerdem sind die ausgezogenen Glaskapillaren (Durchmesser einige zehntel Millimeter) außerordentlich bruchgefährdet. Selbst in einem Gehäuse befindliche Kapillaren können noch durch mechanische Einwirkung zerstört werden.

Zum Stand der Technik gehört der Inhalt der folgenden Druckschriften
- D 1 :: Patent Abstract of Japan: Appl. No: JP 800074524 "Preparation of quartz separating tube for gas-chromatography": Es wird die Herstellung einer Quarz-Kapillaren beschrieben, insbesondere die vorbereitenden Schritte des Ziehens der Kapillare.
- D 2 :: 2010 Le vide, les couches minces; Vol.200(1980), Jan.Fev.Mars Paris FR "Techniques de Controle de L'Etancheite": Offenbart ein Testleck mit einem Glaskörper und einer sich in den Glaskörper hinein erstreckenden Quarz-Kapillaren.
- D 3 :: "Nondestructive Testing Handbook" Band 1, zweite Auflage, Herausgeber R.C. McMaster, 1982: Diesem Dokument ist unter anderem die Lehre entnehmbar, eine Glaskapillare durch eine Metallhülle zu schützen.

Der vorliegenden Erfindung liegt die Aufgabe zugrunde, ein Testleck mit einer leckratenbestimmenden Kapillaren zu schaffen, welches die geschilderten Nachteile (hoher Ausschußanteil, Bruchgefährdung) nicht mehr anhaften.

Erfindungsgemäß wird diese Aufgabe dadurch gelöst, daß die Kapillare eine an sich bekannte, mit Kunststoff ummantelte Quarzkapillare ist. Kapillaren dieser Art werden bei der Chromatographie eingesetzt. Sie bestehen aus Quarzglas und weisen eine üblicherweise aus Polyimid bestehende Ummantelung auf. Infolge dieser Ummantelung sind sie nicht mehr bruchgefährdet. Kapillaren dieser Art können in Längen bis zu 10 m mit gleichbleibendem Innendurchmesser (bis zu 0,005 mm und weniger) hergestellt werden. Um eine bestimmte Leckrate zu erzielen, ist es deshalb lediglich erforderlich, einen Abschnitt mit einer bestimmten Länge und mit einem bestimmten Innendurchmesser zu verwenden. Handwerkliche Glaszieharbeit ist nicht mehr erforderlich.

Zweckmäßig werden sie einseitig mit einer Halterung ausgerüstet, die zum Beispiel nach Art einer Vergaserdüse ausgebildet sein kann. Dadurch ergeben sich äußerst kleine und leicht hantierbare Elemente, die als leckratenbestimmende Elemente bei Testlecks eingesetzt werden können.

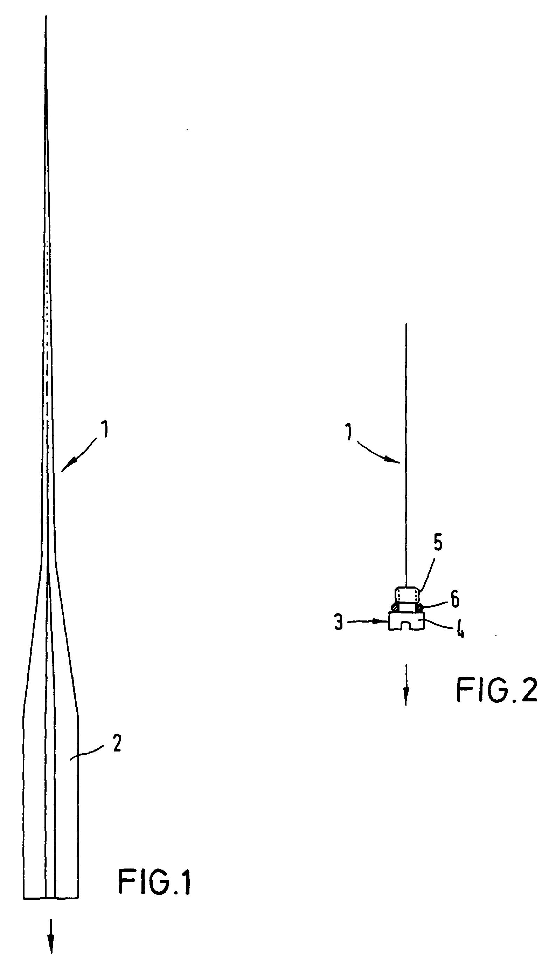

Weitere Vorteile und Einzelheiten der Erfindung sollen anhand der Figuren 1 und 2 erläutert werden.

Figur 1 zeigt eine leckratenbestimmende Kapillare 1 nach dem Stand der Technik. Sie ist aus einem Glasrohr 2 gezogen, dessen äußerer Durchmesser an einem Ende beibehalten wird, um die Glaskapillare hantieren zu können. Dadurch ergeben sich relativ große Abmessungen.

Das leckratenbestimmende Element nach Figur 2 umfaßt einen Kapillar-Abschnitt aus Quarzglas mit einer Ummantelung aus Kunststoff. Kapillaren dieser Art sind an sich bei der Chromatographie bekannt. Sie können beispielsweise bei der Firma SGE bezogen werden. Die Kapillare 1 ist einseitig mit einer Halterung 3 ausgerüstet, die nach Art einer Vergaserdüse gestaltet ist. In den Innendurchmesser der Vergaserdüse 3 ist die Kapillare 1 eingeklebt.

Die Vergaserdüse 3 entspricht einer Maschinenschraube mit Kopf 4 und Gewinde 5. Mit Hilfe des Gewindes 5 kann das leckratenbestimmende Element in das Gehäuse eines Testlecks eingeschraubt werden. Zur Erzielung eines - bis auf die Kapillaröffnung - vakuumdichten Abschlusses liegt der Unterseite des Kopfes 4 zweckmäßig ein Dichtring 6 auf.

Mit einem leckratenbestimmenden Element nach Figur 2 sind die unterschiedlichsten Leckgrößen (Gasdurchflußmengen) herstellbar. Der gewünschte Gasdurchfluß kann durch die Auswahl an verfügbaren Durchmessern und die Länge der Kapillaren 1 vorbestimmt werden. Aufgrund der engen Toleranzen der bei der Chromatographie bekannten Kapillarsäulen kann auf aufwendiges Ausmessen verzichtet werden. Die Kapillare 1 hat auf ihrer gesamten Länge den gleichen Durchmesser. Sie kann deshalb platzsparend eingesetzt werden. Auch die Gasdurchflußgeschwindigkeit ist auf ihrer ganzen Länge gleich.

Aufgrund der hohen Elastizität der bei der Chromatographie bekannten Kapillarsäulen kann die Kapillare 1 auch gebogen oder gewendelt eingesetzt werden. Zusammen mit der als Vergaserdüse 3 ausgebildeten Halterung ist das Element leicht zu hantieren. Es kann mit einem O-Ring gedichtet in das vorbereitete Gehäuse eingeschraubt und ausgetauscht werden.

## Patentansprüche

1. Testleck mit einer leckratenbestimmenden Kapillaren (1), die mit einer Schutzhülle ausgestattet ist, dadurch gekennzeichnet, daß die Kapillare (1) eine an sich bekannte, mit Kunststoff ummantelte Quarzkapillare ist.

2. Testleck nach Anspruch 1, dadurch gekennzeichnet, daß sie ein Abschnitt einer aus der Chromatographie bekannten Kapillarsäule ist.

3. Testleck nach Anspruch 1 oder 2, dadurch gekennzeichnet, daß sie mit einer Halterung (3) ausgerüstet ist und daß die Halterung ein nach Art einer Vergaserdüse gestaltetes Bauteil ist.

4. Testleck nach Anspruch 3, dadurch gekennzeichnet, daß die Halterung eine Vergaserdüse (3) ist, deren Innendurchmesser dem Außendurchmesser der Kapillaren (1) derart entspricht, daß die Kapillare in der Düse durch Kleben befestigbar ist.

5. Testleck nach Anspruch 3 oder 4, dadurch gekennzeichnet, daß sie auf der Seite des Gewindes (5) der Vergaserdüse (3) in die Düsenöffnung eingeklebt ist.

6. Testleck nach Anspruch 3, 4 oder 5, dadurch gekennzeichnet, daß die Unterseite des Kopfes (4) der Halterung (3) mit einem Dichtring (6) ausgerüstet ist.

## Claims

1. Leak-indicator with a leakage rate-determining capillary (1) which is equipped with a protective envelope, characterised in that the capillary (1) is a quartz capillary which is known *per se* and is sheathed with plastic.

2. Leak-indicator according to claim 1, characterised in that it is a section of a capillary column which is known from chromatography.

3. Leak-indicator according to claim 1 or 2, characterised in that it is equipped with a holding device (3) and that the said holding device is a component shaped after the fashion of a gasifier nozzle.

4. Leak-indicator according to claim 3, characterised in that the holding device is a gasifier nozzle (3), the internal diameter of which corresponds to the outer diameter of the capillary (1) in such a way that the capillary can be fastened in the nozzle by gluing.

5. Leak-indicator according to claim 3 or 4, characterised in that it is glued into the nozzle opening on the same side as the thread (5) of the gasifier nozzle (3).

6. Leak-indicator according to claim 3, 4 or 5, characterised in that the underside of the head (4) of the holding device (3) is equipped with a sealing ring (6).

## Revendications

1. Dispositif de fuite de test, avec un capillaire (1) déterminant un débit de fuite, équipé d'une gaine de protection, caractérisé en ce que le capillaire (1) en quartz, enveloppé de matière synthétique, connu en soi.

2. Dispositif de fuite de test selon la revendication 1, caractérisé en ce qu'il est constitué par un tronçon d'une colonne de capillaire, connue de la chromatographie.

3. Dispositif de fuite de test selon l'une des revendications 1 ou 2, caractérisé en ce qu'il est équipé d'une fixation (3) et en ce que la fixation est un composant configuré à la façon d'un gicleur de carburateur.

4. Dispositif de fuite de test selon la revendication 3, caractérisé en ce que la fixation est un gicleur de carburateur (3), dont le diamètre intérieur correspond au diamètre extérieur du capillaire (1), de manière que le capillaire soit susceptible d'être fixé dans le gicleur par collage.

5. Dispositif de fuite de test selon la revendication 3 ou 4, caractérisé en ce qu'il est monté avec collage, du côté filetage (5) du gicleur de carburateur (3), à l'intérieur de l'ouverture du gicleur.

6. Dispositif de fuite de test selon la revendication 3, 4 ou 5, caractérisé en ce que la face inférieure de la tête (4) de la fixation (3) est équipée d'une bague d'étanchéité (6).
